# FASCICULE DE BREVET EUROPEEN

(11) **EP 3 890 287 B1**
(45) Date de publication et mention de la délivrance du brevet: **23.04.2025**
(21) Numéro de dépôt: 21164504.9
(22) Date de dépôt: 24.03.2021
(51) Int. Cl.: H04M 1/57, H04M 1/663

(54) **PROCÉDÉ ET DISPOSITIF DE GESTION DES APPELS ENTRANTS DANS UN TERMINAL DE COMMUNICATION**
VERFAHREN UND VORRICHTUNG ZUR VERWALTUNG EINGEHENDER ANRUFE IN EINEM KOMMUNIKATIONSENDGERÄT
METHOD AND DEVICE FOR MANAGING INCOMING CALLS IN A COMMUNICATION TERMINAL

(30) Priorité: 31.03.2020 FR 2003165
(43) Date de publication de la demande: 06.10.2021
(73) Titulaire: Orange, 92130 Issy-les-Moulineaux (FR)
(72) Inventeur: AUFFRET, Jean-Marc, 92326 CHATILLON CEDEX (FR); GUILLOU, Aurélien, 92326 CHATILLON CEDEX (FR); CLEUZIOU, Olivier, 92326 CHATILLON CEDEX (FR); JESTIN, Jean-François, 92326 CHATILLON CEDEX (FR)

(56) Documents cités:
- US-A1- 2019 335 036
- US-A1- 2020 053 568

## Description

La présente invention concerne un procédé de gestion des appels entrants dans un terminal de communication.

Elle concerne en outre un dispositif de gestion des appels entrants dans un terminal de communication ainsi qu'un terminal de communication.

L'invention trouve son application dans les communications entre terminaux de communication, tel que des terminaux de téléphonie.

Les terminaux de téléphonie, qu'ils soient fixes ou mobiles, reçoivent de nos jours, de plus en plus d'appels malveillants, connues comme *spam.*

A ce jour des solutions existent pour rejeter les appels malveillants ou appels de type *spam,* destinés à un terminal de téléphonie. Ces solutions sont connues comme services « *anti-spam* ».

Un service *anti-spam* très répandu consiste à vérifier si l'identifiant ou numéro d'un appel entrant est présent dans une base de données répertoriant des identifiants ou numéros d'appel correspondant à des appelants générateurs de *spam.*

L'identifiant d'appel est un identifiant unique associé au terminal de communication permettant d'identifier le terminal de communication dans un réseau, fixe ou mobile, d'un opérateur.

En général, ce type de base de données répertoriant des identifiants d'appel correspondant à des générateurs de *spam,* est mise à jour grâce aux retours des utilisateurs de services de téléphonie ou à des algorithmes destinés à mettre à jour les bases de données après détection d'appels malveillants ou de type *spam.* La base de données utilisée pour les services *anti-spam* peut être aussi mise à jour avec d'autres bases de données récoltant des appelants générant du *spam,* par exemple une base de données créée à partir des signalements des utilisateurs via des numéros de téléphone destinés à récolter des identifiants d'appelants générant du *spam,* tel que le numéro de téléphone 33700.

Ces bases de données sont en général stockées dans des entités de support des applications. Ces entités de support sont connues comme « back-end » des applications et se trouvent en général dans des serveurs centralisés interrogeables à distance via une interface dédiée, telle que celle utilisée dans l'architecture HTTP REST (pour « Representational State Transfer »). Les entités de support ou *back-end* d'une application contient des données nécessaires au fonctionnement de l'application. Par exemple, pour le fonctionnement du service *anti-spam,* la base de données répertoriant des identifiants d'appel correspondant à des appelants générateurs de *spam* est consultée par le terminal de communication lorsqu'il reçoit un appel entrant afin de vérifier si l'identifiant de l'appel est répertorié dans la base de données. Ce service *anti-spam* peut être mis en œuvre par l'application gérant les appels entrants ou sortants installée sur le terminal de communication

Dans ce type de service *anti-spam,* lorsqu'un terminal de téléphonie reçoit un appel entrant, le service *anti-spam* vérifie si l'identifiant ou numéro d'appel associé à l'appel entrant se trouve dans la base de données. Si l'identifiant d'appel est présent dans la base de données, l'appel entrant est qualifié d'appel malveillant ou *spam.* Le service *anti-spam* peut ainsi rejeter cet appel entrant.

Selon de différentes mises en œuvre du service *anti-spam,* le rejet de l'appel entrant peut intervenir avant que l'appel soit présenté à l'utilisateur ou après que l'appel soit présenté à l'utilisateur.

Ce type de services *anti-spam* est efficace. Néanmoins, pour des nouveaux numéros ou identifiants d'appel correspondant à un *spam,* ces numéros ou identifiants d'appel n'étant pas répertoriés dans la base de données, le service *anti-spam* ne fonctionne pas. Ainsi, par exemple, dans le cas de numéros ou identifiants d'appel de type *spam* générés par des robots, ces numéros ou identifiants d'appel étant différents à chaque génération, la base de données ne contient pas ces numéros ou identifiants d'appel, et le *spam* n'est pas détecté. Ainsi, dans ce cas le service *anti-spam* n'est pas utile.

Par ailleurs on connait le document US 2020/0053568 Al qui décrit un procédé permettant d'identifier des appels suspects notamment en utilisant l'identité de l'appelant dans le « SIP INVITE » message pour vérifier l'inscription dudit appelant au sein des bases de données HSSI, USD et HLR des Réseau HPMLN ou VPLMN.

On connaît également le document US 2019/0335036 A1 qui décrit un procédé mis en œuvre lors d'un appel reçu par une unité de contrôle d'appel associée à un téléphone permettant de déterminer des informations relatives à l'appelant et de présenter des informations concernant ledit appelant sur le téléphone.

La présente invention a pour but d'améliorer la détection d'appels malveillants ou de type *spam,* destinés à un terminal de communication.

A cet effet, l'invention propose un procédé de gestion d'un appel entrant dans un terminal de communication, l'appel entrant ayant un identifiant d'appel associé.

Selon l'invention, le procédé de gestion comporte :
- la vérification du routage d'un appel sortant vers l'identifiant d'appel associé à l'appel entrant, ladite vérification comprenant l'émission d'un appel sortant vers ledit identifiant d'appel, et
- la qualification de l'appel entrant en fonction du résultat de la vérification du routage, l'appel entrant étant qualifié d'appel entrant malveillant s'il résulte de la vérification du routage que l'appel sortant émis vers ledit identifiant d'appel ne peut pas être acheminé.

Ainsi, pour un appel entrant, il est vérifié si une communication peut être établie, au moyen d'un appel sortant, avec l'identifiant d'appel de l'appel entrant, pour pouvoir déterminer si l'appel entrant est un appel malveillant ou de type *spam* (ou « *spam* »). L'identifiant d'appel associé à l'appel, ou identifiant d'appel de l'appel entrant, est un identifiant unique permettant d'identifier dans un réseau, le terminal de communication émettant l'appel. Lorsque, selon le résultat de la vérification du routage, un appel sortant vers l'identifiant d'appel associé à l'appel entrant, ne peut pas être acheminé ou routé, l'appel entrant est qualifié d'appel malveillant ou *spam.* Une fois l'appel entrant qualifié, il peut être traité, c'est-à-dire il peut être soit accepté s'il est qualifié comme n'étant pas un appel malveillant ou *spam,* soit rejeté s'il est qualifié d'appel malveillant ou *spam.*

On notera que l'identifiant d'appel associé à un appel de type *spam* ne peut pas être routé. Dans d'autres termes, aucun appel ne peut être émis vers un identifiant ou numéro d'appel associé à un *spam.* Ainsi, la vérification du routage permet de déterminer si l'appel entrant est ou n'est pas un *spam.*

Grâce à ce procédé, un appel entrant peut être qualifié de *spam* sans avoir à accéder à de bases de données répertoriant des identifiants d'appel correspondant à de *spams.* La détection de *spams* peut ainsi être mise en œuvre rapidement et de manière efficace, même dans le cas d'un nouveau identifiant d'appel, généré par exemple par un robot, correspondant à un *spam.*

Selon une caractéristique, le procédé de gestion comporte en outre soit le rejet de l'appel entrant soit le maintien de l'appel entrant en fonction de la qualification dudit appel entrant, le rejet étant mis en œuvre si l'appel entrant est qualifié d'appel malveillant.

Ainsi, en fonction du résultat de la vérification du routage, l'appel entrant est rejeté ou maintenu.

En particulier, l'appel entrant est rejeté s'il résulte de la vérification du routage que l'appel sortant ne peut pas être routé. Dans d'autres termes, un appel entrant ayant un identifiant d'appel vers lequel un appel sortant ne peut pas être effectué, est rejeté.

On notera que le rejet d'appels malveillants peut être mis en œuvre sans avoir à accéder à de bases de données répertoriant d'identifiants d'appel correspondant à de *spams.* Le rejet de *spams* est ainsi mise en œuvre automatiquement et de manière efficace, même dans le cas d'un nouveau identifiant d'appel correspondant à un *spam.*

En outre, l'appel entrant est maintenu s'il résulte de la vérification du routage que l'appel sortant peut être routé. Selon de différents modes de réalisation décrits ci-dessous, l'appel entrant peut être mis en attente pendant que la vérification du routage et la qualification de l'appel entrant sont mises en œuvre, ou alors il peut être présenté à l'utilisateur du terminal de communications pendant que la vérification du routage et la qualification de l'appel entrant sont mises en œuvre.

Selon une caractéristique, la vérification du routage comporte l'émission d'une requête de vérification de l'appel sortant pour déterminer si l'appel sortant peut être acheminé.

Selon un mode de réalisation, la vérification du routage comporte la vérification d'informations relatives à l'identifiant d'appel associé à l'appel entrant, dans une base de données répertoriant la totalité d'identifiants d'appels autorisés à utiliser un réseau de communications.

Dans un mode de réalisation, la vérification d'informations relatives à l'identifiant d'appel suit l'émission de la requête de vérification de l'appel sortant.

Comme indiqué ci-dessous un appel sortant vers un identifiant d'appel correspondant à un *spam* ne peut pas être routé. Ainsi, pour déterminer si l'appel sortant peut être routé, il est par exemple vérifié si l'identifiant d'appel associé à l'appel entrant est présent dans une base de données contenant les informations relatives à des abonnés d'un réseau de communications. Si l'identifiant d'appel est présent dans la base de données, l'appel sortant vers cet identifiant d'appel est routable. Si au contraire, l'identifiant d'appel n'est pas présent dans la base de données, l'appel sortant vers cet identifiant d'appel, n'est pas routable. D'autres informations relatives à l'identifiant d'appel peuvent être vérifiées, telles que le pays d'origine de l'appel entrant (« code pays » ou « country code » en terminologie anglo-saxonne).

Selon une caractéristique, le procédé de gestion comporte la réception d'un message comportant une information représentative soit de la possibilité soit de l'impossibilité, d'acheminer l'appel sortant.

Par exemple, lorsque l'appel sortant ne peut pas être routé, la vérification comporte en outre la réception d'un message représentatif de l'impossibilité de router l'appel sortant.

Selon une caractéristique, le procédé de gestion comporte préalablement à ladite vérification du routage, la consultation de la présence dudit identifiant d'appel, dans une base de données répertoriant des identifiants d'appel malveillants, la vérification étant mise en œuvre si l'identifiant d'appel n'est pas présent dans la base de données.

Dans ce mode de réalisation, avant de mettre en œuvre la vérification du routage, la présence de l'identifiant d'appel de l'appel entrant dans une base de données répertoriant les identifiants d'appel correspondant à de *spams* (ou base de données de *spams*) est vérifié. Si l'identifiant d'appel est déjà présent dans la base de données des *spams,* l'appel entrant est rejeté. Si l'identifiant d'appel n'est pas présent dans la base de données, par exemple pour des nouveaux *spams,* la vérification du routage est mise en œuvre.

Ce mode de réalisation permet de diminuer le nombre de requêtes sur le réseau de signalisation pour vérifier si des identifiants d'appel peuvent être routés.

Selon une caractéristique, le procédé de gestion comporte la temporisation de la présentation dudit appel entrant dans ledit terminal de communication, ladite temporisation étant mise en œuvre pendant que la vérification du routage et la qualification de l'appel entrant sont mises en œuvre.

Autrement dit, l'appel entrant est mis en attente pendant que la vérification du routage et la qualification de l'appel entrant sont mises en œuvre, la présentation de l'appel entrant étant mise en œuvre une fois que la vérification de routage et la qualification de l'appel entrant sont terminées.

Ainsi, l'appel entrant n'est pas signalé dans le terminal de communication tant que la vérification du routage et la qualification de l'appel entrant sont mises en œuvre.

Par conséquent, dans ce mode de réalisation, l'utilisateur du terminal n'est pas prévenu de l'appel entrant, en attendant de vérifier s'il s'agît d'un *spam.* Grâce à cette caractéristique, la détection de *spams* est transparente pour l'utilisateur du terminal de communication. En effet, l'appel entrant étant mise en attente pendant que la vérification du routage et la qualification de l'appel entrant sont mises en œuvre, s'il s'avère que l'appel entrant est un *spam,* l'appel entrant est rejetée sans que l'utilisateur n'ait reçu l'appel entrant.

Dans d'autres modes de réalisation, la présentation de l'appel entrant n'est pas temporisée pendant que la vérification du routage et la qualification de l'appel entrant sont mises en œuvre.

Dans ce cas, l'utilisateur doit lui-même être vigilant et attendre que la qualification de l'appel entrant soit mise en œuvre.

Selon un mode de réalisation, le procédé de gestion comporte en outre la génération d'un message indicatif de la mise en œuvre d'une opération de vérification de l'appel entrant.

L'utilisateur du terminal portable est ainsi prévenu qu'une vérification de *spam* est mise en œuvre sur un appel entrant. Ce mode de réalisation est particulièrement avantageux lorsque l'appel entrant n'est pas mis en attente tant que la vérification du routage est mise en œuvre. Ainsi, l'utilisateur prévenu qu'une vérification est mise en œuvre sur l'appel entrant, il peut attendre le résultat de la vérification avant d'éventuellement prendre l'appel entrant.

Dans le cas où l'appel entrant est mise en attente pendant la mise en œuvre de la vérification, la notification de la vérification sert à informer l'utilisateur de la mise en œuvre de la vérification de *spam,* bien que l'appel ne lui soit pas présenté. Dans ce cas, cette notification est moins importante car l'appel entrant ne lui a pas encore été présentée. L'utilisateur est simplement informé de la mise en œuvre d'une opération de vérification et peut s'attendre à éventuellement répondre à un appel entrant.

Selon d'autres modes de réalisation, la mise en œuvre de la vérification du routage de l'appel sortant n'est pas notifiée à l'utilisateur.

Ce mode de réalisation est notamment avantageux lorsque la présentation de l'appel entrant n'est pas mise en œuvre tant que la vérification du routage et la qualification de l'appel entrant ne sont pas finalisées. Ainsi, le rejet d'un *spam* est effectué de manière complétement transparente pour l'utilisateur.

Selon une caractéristique lorsque l'appel sortant ne peut pas être routé, le procédé de gestion comprend en outre la génération d'un message indiquant qu'un appel malveillant a été détecté.

Ce message indiquant la détection d'un appel malveillant est purement informatif.

La présente invention concerne, selon un deuxième aspect, un dispositif de gestion d'un appel entrant dans un terminal de communication, l'appel entrant ayant un identifiant d'appel associé.

Selon l'invention, le dispositif de gestion comporte :
- un module de vérification du routage configuré pour vérifier le routage d'un appel sortant vers l'identifiant d'appel associé à l'appel entrant, ladite vérification comprenant l'émission d'un appel sortant vers ledit identifiant d'appel, et
- un module de qualification configuré pour qualifier l'appel entrant en fonction du résultat de la vérification mise en œuvre par le module de vérification, l'appel entrant étant qualifié d'appel malveillant si selon la vérification, l'appel sortant émis vers ledit identifiant d'appel ne peut pas être acheminé.

Selon une caractéristique, le dispositif de gestion comporte en outre un module de décision configuré pour décider de rejeter ou de maintenir l'appel entrant en fonction de ladite qualification mise en œuvre par le module de qualification.

La présente invention concerne, selon un troisième aspect, un terminal de communication comportant un dispositif de gestion d'un appel entrant conforme à l'invention.

La présente invention concerne, selon un quatrième aspect, un dispositif d'interface entre deux réseaux de communication comportant un dispositif de gestion d'un appel entrant conforme à l'invention.

La présente invention concerne, selon un cinquième aspect, un programme d'ordinateur comprenant une séquence d'instructions pour la mise en œuvre du procédé de gestion d'un appel entrant conforme à l'invention, lorsqu'il est chargé et exécuté par un processeur du dispositif de gestion d'un appel entrant.

La présente invention concerne, selon un sixième aspect, un support d'informations lisible par un ordinateur, sur lequel est enregistré un programme d'ordinateur comprenant une séquence d'instructions pour la mise en œuvre du procédé de gestion conforme à l'invention, lorsqu'il est chargé dans et exécuté par un processeur du dispositif de gestion d'un appel entrant.

Le dispositif de gestion, le terminal de communication, le dispositif d'interface, le programme d'ordinateur et le support d'informations présentent des caractéristiques et avantages analogues à ceux décrits précédemment en relation avec le procédé de gestion d'un appel entrant.

D'autres particularités et avantages de l'invention apparaîtront encore dans la description ci-après.

Aux dessins annexés, donnés à titre d'exemples non limitatifs :
- la figure 1 représente un terminal de communication recevant un appel entrant et un dispositif de gestion d'un appel entrant conforme à un mode de réalisation de l'invention,
- la figure 2 illustre des étapes du procédé de gestion conforme à un mode de réalisation de l'invention,
- la figure 3a illustre des étapes du procédé de gestion conforme à un mode de réalisation de l'invention sous forme d'échanges entre des entités, lorsque l'appel entrant en un appel malveillant,
- la figure 3b illustre des étapes du procédé de gestion conforme à un mode de réalisation de l'invention sous forme d'échanges entre des entités, lorsque l'appel entrant n'est pas malveillant,
- la figure 4a illustre une architecture matérielle pouvant mettre en œuvre le procédé de gestion conforme à l'invention, et
- la figure 4b est une représentation fonctionnelle d'un dispositif de gestion conforme à un mode de réalisation de l'invention.

L'invention s'applique à tout dispositif ou terminal de communication pouvant établir des communications téléphoniques avec d'autres dispositifs ou terminaux de communication.

Ce type de dispositif ou terminal de communication est par exemple un terminal de communication mobile, tel qu'un téléphone mobile, une tablette ou un ordinateur personnel. Le terminal de communication peut aussi être un terminal de téléphonie fixe.

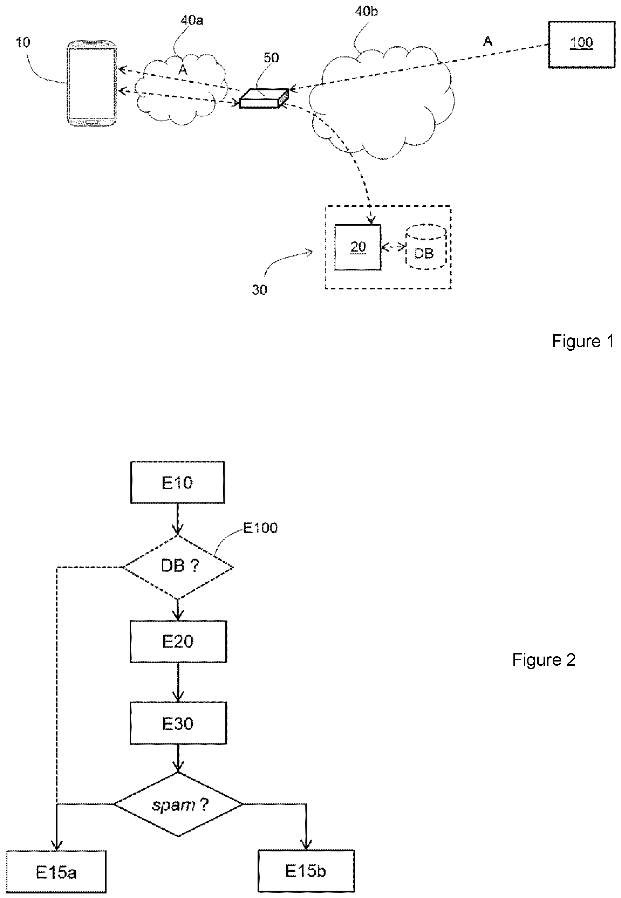

La **figure 1** représente un exemple d'architecture pouvant mettre en œuvre le procédé de gestion conforme à l'invention. En particulier, la figure 1 représente un terminal de communication 10 recevant un appel entrant A en provenance d'un dispositif de communication 100, et un dispositif de gestion 20 des appels entrants.

Dans le mode de réalisation représenté, le dispositif de gestion 20 fait partie des entités de support 30 des applications installées dans le terminal de communication 10. Ces entités de support 30 sont connues comme « Back-end » des applications.

Comme indiqué ci-dessus, les entités de support 30, ou *back-end* d'une application, contiennent des données nécessaires au fonctionnement de l'application.

Dans le mode de réalisation représenté, le dispositif de gestion 20 fait partie des entités de support 30 des applications du terminal de communication 10. Le terminal de communication 10 et le dispositif de gestion 20 sont reliés entre eux via un ou plusieurs réseaux de communication 40a, 40b. Dans le mode de réalisation représenté, une passerelle 50, telle qu'une passerelle résidentielle, permet l'accès du terminal de l'utilisateur 10 au réseau de communication 40b, tel qu'Internet.

Dans d'autres modes de réalisation, le dispositif de gestion est indépendant des entités de support 30 des applications installées dans le terminal de communication 10. Le dispositif de gestion peut être intégré dans une passerelle 50 ou dispositif d'interface entre deux réseaux de communication. Par exemple, il peut être intégré dans une passerelle résidentielle, destinée à relier un réseau d'accès à un réseau de commutation de paquets, tel qu'Internet. Dans d'autres modes de réalisation, le dispositif de gestion peut être intégré dans des équipements d'un réseau de communications, tels qu'un commutateur ou un routeur.

Dans d'autres modes de réalisation, le dispositif de gestion peut être embarqué dans le terminal de communication.

Dans certains modes de réalisation, les entités de support comportent une base de données DB configurés pour répertorier des identifiants ou numéros d'appel correspondant à des appelants générateurs de *spam.* Cette base de données étant optionnelle, elle est représentée en traits pointillés sur la figure 1. Comme il sera décrit ultérieurement, cette base de données DB peut être consultée dans certains modes de réalisation de l'invention.

Dans d'autres modes de réalisation, les entités de support ne contiennent pas de base de données répertoriant des identifiants ou numéros d'appel correspondant à des appelants générateurs de *spam.*

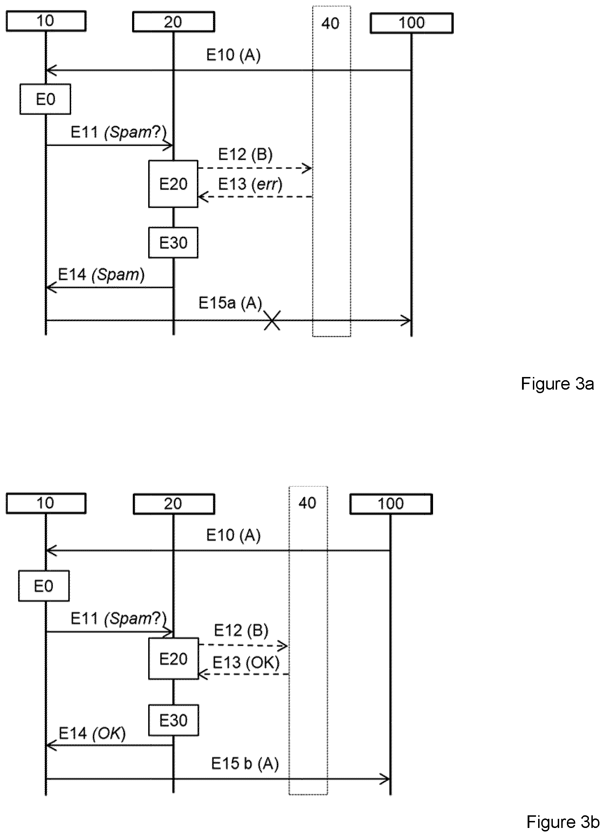

Comme il sera décrit ci-dessous en référence aux figures 2, 3a et 3b, lorsque le terminal de communication 10 reçoit un appel entrant A, il consulte le dispositif de gestion 20 afin de savoir si l'appel entrant A est un appel malveillant ou pas et en fonction, indiquer au terminal de communication 10 si l'appel entrant A peut être accepté ou doit être rejeté.

Dans certains modes de réalisation, le dispositif de gestion 20 peut consulter la base de données DB. On notera que la consultation est optionnelle et que dans d'autres modes de réalisation aucune base de données n'est utilisée ou n'est pas présente dans les entités de support 30.

La **figure 2** illustre des étapes du procédé de gestion d'un appel entrant A dans un terminal de communication 10 conforme à un mode de réalisation.

Le procédé de gestion est mis en œuvre lorsqu'un appel entrant A est reçu E10 dans le terminal de communication 10. Lorsque le terminal de communication 10 reçoit un appel entrant A, le procédé de gestion de l'appel entrant A est mis en œuvre afin de déterminer si l'appel entrant A est un appel malveillant ou *spam.*

Le procédé de gestion de l'appel entrant A comporte la vérification du routage E20 d'un appel sortant vers un identifiant d'appel associé à l'appel entrant A. En fonction de la vérification du routage E20, l'appel entrant est qualifié E30 d'appel malveillant ou pas malveillant. Si l'appel sortant B ne peut pas être routé, l'appel entrant A est qualifié E30 d'appel malveillant ou *spam.*

Si l'appel entrant A est qualifié d'appel malveillant ou *spam,* l'appel entrant A est rejeté E15a. Si au contraire l'appel entrant A n'est pas qualifié de *spam,* l'appel entrant A est accepté E15b.

Dans un mode de réalisation, lorsque le terminal de communication 10 reçoit E10 un appel entrant A, le procédé de gestion comporte la consultation E100 (représenté en traits pointillés) de la présence de l'identifiant d'appel associé à l'appel entrant A dans une base de données DB (figure 1) répertoriant des identifiants d'appel malveillants. Si selon la consultation E100, l'identifiant d'appel se trouve dans la base de données DB, l'appel entrant A est rejeté E15a et la vérification du routage E20 n'est pas mise en œuvre. Si selon la consultation E100, l'identifiant d'appel n'est pas présent dans la base de données DB, la vérification du routage E20 est mise en œuvre.

Ce mode de réalisation permet de diminuer le nombre de requêtes émises sur le réseau de signalisation, pour vérifier si l'identifiant d'appel associé à l'appel entrant A peut être routé, c'est-à-dire pour vérifier qu'un lien de communication peut être l'établi.

On notera que dans un premier mode de réalisation, la vérification du routage E20 est mise en œuvre pour tout appel entrant reçu dans le terminal de communication 10 et que dans un deuxième mode de réalisation, la vérification du routage E20 est uniquement mise en œuvre si l'identifiant d'appel associé à l'appel entrant A n'est pas répertorié dans une base de données DB. Dans le premier mode de réalisation la tenue d'une base de données répertoriant des identifiants d'appel malveillants n'est pas nécessaire.

Les **figures 3a et 3b** illustrent, sous forme d'échanges entre les entités, des étapes du procédé de gestion d'un appel entrant conforme à un mode de réalisation. En particulier, ces figures représentent des échanges entre le terminal de communication 10, le dispositif de gestion 20 des appels entrants et un terminal de communication appelant 100 émettant l'appel entrant dans le terminal de communication 10.

La figure 3a représente des étapes du procédé de gestion mises en œuvre lorsque le terminal de communication 10 reçoit un appel entrant A malveillant. La figure 3b représente des étapes du procédé de gestion mises en œuvre lorsque le terminal de communication 10 reçoit un appel entrant A non malveillant.

On notera que dans le mode de réalisation décrit, le dispositif de gestion 20 est externe au terminal de communication 10.

Dans d'autres modes de réalisation non illustrés, le dispositif de gestion est intégré au terminal de communication. Le dispositif de gestion peut aussi être intégré dans une passerelle, tel qu'une passerelle résidentielle ou dans des équipements d'un réseau de communications, tels qu'un commutateur ou un routeur.

Lorsque le terminal de communication 10 reçoit un appel entrant A, provenant ici d'un terminal de communication d'appelant 100, il est vérifié si l'appel entrant A est un appel malveillant.

Dans un mode de réalisation, le terminal de communication 10 adresse au dispositif de gestion 20 une commande ou requête de vérification E11 lui demandant de vérifier si l'appel entrant A est un appel malveillant ou *spam.* Dans cette requête ou commande de vérification le terminal de communication 10 adresse au dispositif de gestion 20 l'identifiant d'appel de l'appel entrant A.

Par exemple, la requête de vérification est émise par le terminal de communication 10 via une interface de type http REST.

A titre d'exemple nullement limitatif, la requête de vérification peut être du type suivant :
*"$ curl -d '{ "cmd": "getSpamStatus ", "numbers ":["0600000001"], "token": "123456789"}' https:*//*backend_antispam*/*api"*

Dans cet exemple, l'identifiant d'appel de l'appel entrant A est le numéro *"0600000001".* Avec cette requête de vérification, le terminal de communication 10 demande au dispositif de gestion 20, de vérifier le routage de l'identifiant d'appel *"0600000001".*

Cette requête de vérification est du type http REST. Les paramètres utilisés dans cette requête de vérification sont connus de l'homme du métier. Les paramètres *"cmd", "getSpamStatus", "numbers ", "token": "123456789"* sont propres aux requêtes de type http REST.L'URL *https:*//*backend_antispam*/*api* correspond à une requête de type http POST qui est bien connue de l'homme du métier.

Bien entendu, des requêtes d'autres types peuvent être employées. Par exemple, lorsque le terminal de communication reçoit un appel entrant, il peut seulement envoyer l'identifiant d'appel au dispositif de gestion.

Dans d'autres modes de réalisation, le dispositif de gestion peut détecter lui-même que le terminal de communication reçoit un appel entrant. Dans ce mode de réalisation le dispositif de gestion mets en œuvre la vérification de l'appel entrant sans que le terminal de communication ait à lui envoyer une requête de vérification (tel que E11 dans le mode de réalisation représenté) lui demandant de vérifier si l'appel entrant est un appel malveillant ou *spam.*

Dans le mode de réalisation représenté, le dispositif de gestion 20 recevant cette demande de vérification, met en œuvre une vérification du routage E20 d'un appel sortant B vers l'identifiant d'appel associé à l'appel entrant A.

Dans ce mode de réalisation, le procédé de gestion comporte l'émission d'une requête de vérification de l'appel sortant E12(B) pour déterminer si un appel sortant vers l'identifiant d'appel de l'appel entrant A peut être émis.

La requête de vérification de l'appel sortant E12(B) est destinée à une entité ou serveur du réseau de communication 40 en charge du routage des appels entrants vers le terminal de communication 10 et sortant du terminal de communication 10.

Dans un mode de réalisation, la requête de vérification de l'appel sortant E12(B) est configuré pour vérifier des informations relatives à l'identifiant d'appel associé à l'appel entrant A, dans une base de données (non représentée) répertoriant la totalité d'identifiants d'appels autorisés à utiliser un réseau de communications 40.

Par exemple, la requête de vérification de l'appel sortant E12(B) est configurée pour vérifier la présence de l'identifiant d'appel dans une base de données telle que HLR (pour « Home Location Register ») lorsque le réseau de communications 40 est un réseau mobile, ou dans une base de données telle que HSS (pour « Home Subscriber Server ») lorsque le réseau de communications 40 est un réseau fixe.

Si l'identifiant d'appel est présent dans la base de données HLR, HSS ou similaires, un appel sortant vers cet identifiant d'appel est routable. Si au contraire, l'identifiant d'appel n'est pas présent dans la base de données, l'appel sortant vers cet identifiant d'appel, n'est pas routable.

Bien entendu, la vérification du routage E20 peut être mise en œuvre selon des modes de réalisation différents, et notamment en fonction du type d'identifiant d'appel dont le routage va être vérifié.

Par exemple, si l'identifiant d'appel correspond à celui d'un abonné à un réseau de communication, fixe ou mobile, utilisant la technologie IMS (pour « *IP Multimedia Subsystem* »), le dispositif de gestion 20 peut émettre une requête de vérification de l'appel sortant vers le terminal de communication appelant 100 via le réseau de communication 40 (ou réseaux de communication 40a, 40b). Une telle requête peut être par exemple une requête SIP OPTIONS. Cette requête est utilisée pour vérifier silencieusement si l'appel sortant vers un destinataire (ayant un identifiant d'appel associé) peut être routé.

Un exemple de requête SIP OPTIONS est la suivante :
« *OPTIONS sip:carol@ims.com SIP*/*2.0*
*Via: SIP*/*2.0*/*UDP ims.com;branch=z9hG877*
*Max-Forwards: 70*
*To: <sip: 0600000001 @ims.com>*
*From: <sip: 0600000000@ims.com>; tag=123*
*Call-ID: a84b4c76e66710*
*CSeq: 63104 OPTIONS*
*Accept: application*/*sdp*
*Content-Length: 0* »
Où « 0600000001 » est l'identifiant d'appel associé à l'appel sortant dont le routage est vérifié. Autrement dit, avec cette requête SIP, le dispositif de gestion 20 vérifie le routage d'un appel sortant vers l'identifiant d'appel « 0600000001 ».

Si le routage est impossible, le dispositif de gestion 20 reçoit E12 en provenance du réseau de communication 40, en particulier d'une entité du réseau de communication 40a, 40b ayant interrogé les bases de données de type HLR ou HSS, un message d'erreur *err* du type « unallocated number », « no route to network », « no route to destination » ou autres (figure 3a), en réponse à cette requête.

Si le routage est possible, le dispositif de gestion 20 reçoit, en réponse à cette requête, un message indiquant que l'identifiant d'appel est routable. A titre d'exemple nullement limitatif, la réponse peut prendre la forme suivante :
« *SIP*/*2.0 200 OK*
*Via: SIP*/*2.0*/*UDP ims.com;branch= z9hG877*
*To: <sip: 0600000001 @ims.com> > ;tag=123*
*From: <sip: 0600000000@ims.com>;tag=123 Call-ID: a84b4c76e66710*
*CSeq: 63104 OPTIONS*
*Allow: INVITE, ACK, CANCEL, OPTIONS, BYE*
*Content-Length: 0* »
Où « 200 OK » signifie que l'identifiant d'appel est routable (figure 3b).

Si par exemple, l'identifiant d'appel correspond à un réseau de communication 40 mobile, le dispositif de gestion 20 peut émettre une requête selon le protocole MAP (pour « Mobile Application Part ») régissant l'ensemble des échanges entre équipements du réseau mobile 40, telle qu'une requête « MAP_SEND_ROUTING_INFORMATION » afin d'interroger le HLR (pour « Home Location Register » et le VLR (pour « Visitor Location Register ») pour vérifier les informations de routage de mlidentifiant d'appel.

Si l'identifiant d'appel n'est pas routable, l'entité ayant interrogé les bases de données du type HLR ou VLR répond au dispositif de gestion 20 avec une erreur MAP tel que « Unknown Subscriber ».

Selon un autre mode de réalisation, la vérification du routage peut être mise en œuvre par consultation d'une base de données tenue par l'opérateur téléphonique répertoriant des numéros ou identifiants d'appel non attribués. Ainsi, si l'identifiant d'appel de l'appel entrant est présent dans cette base de données, le dispositif de gestion 20 reçoit un message lui indiquant que l'identifiant d'appel de l'appel entrant n'est pas attribué. Dans ce cas, l'appel entrant est qualifié de *spam.*

Bien entendu, la vérification du routage peut être mise en œuvre en utilisant d'autres moyens. Par exemple, en utilisant des services de type « VLR lookup » ou similaires proposés par de fournisseurs de services n'appartenant pas à l'opérateur téléphonique, ces services tiers permettant de vérifier si un identifiant d'appel est valide ou n'est pas valide.

Bien entendu, d'autres moyens peuvent être utilisés pour vérifier le routage d'appel sortant. Par exemple, dans des communications mises en œuvre par des connexions point à point, en cas d'impossibilité d'établir une connexion avec un point distant, on considère que le point distant n'est pas joignable et donc pas routable. Autrement dit, un appel sortant vers le point distant ne peut pas être acheminé.

On notera qu'un appel sortant ne peut pas être routé, si aucune communication ne peut pas être établie avec un terminal de communication en utilisant l'identifiant d'appel associé à l'appel sortant.

Ainsi, si l'appel sortant B ne peut pas être routé (cas de la figure 3a), le dispositif de gestion 20 reçoit E13 un message d'erreur *err* représentatif de l'impossibilité de router l'appel sortant B. Ce message d'erreur *err* est généré par des entités différentes en fonction du type de réseau de communication 40 utilisé.

En fonction du résultat de la vérification E20, l'appel entrant A est qualifié E30.

Lors de cette qualification, si l'appel sortant B ne peut pas être routé l'appel entrant A étant qualifié d'appel entrant malveillant (cas de la figure 3a). Si au contraire, l'appel sortant B peut être routé (cas de la figure 3b), l'appel entrant A est qualifié E30 d'appel entrant A non malveillant.

Dans ce mode de réalisation, le procédé comporte la réception d'un message comportant une information représentatif de l'impossibilité d'acheminer l'appel sortant B.

Dans certains modes de réalisation, le procédé comporte la réception d'un message comportant une information représentatif soit de la possibilité soit de l'impossibilité d'acheminer ledit appel sortant (B).

Dans ce mode de réalisation, le dispositif de gestion reçoit toujours un message lui informant si le routage de l'appel sortant peut être mis en œuvre, ou si au contraire, il ne peut pas être mis en œuvre.

Dans le mode de réalisation représenté, une fois la qualification E30 mise en œuvre, le dispositif de gestion 20 adresse E14 au terminal de communication 10, un message incluant la qualification de l'appel entrant A.

Reprenant l'exemple de requête de vérification ci-dessus, le message incluant la qualification de l'appel entrant A adressé E14 au terminal de communication 10 peut être en format JSON (pour « JavaScript Object Notation ») et peut prendre la forme suivante :

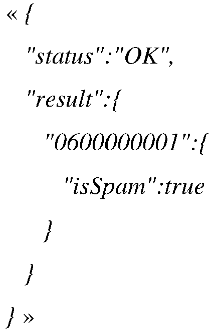

Dans cet exemple, l'appel entrant avec l'identifiant d'appel « *0600000001* » est qualifié de spam (figure 3a). Bien entendu, le format des messages incluant la qualification peut être différent.

Le terminal de communication 10, à réception du message incluant la qualification de l'appel entrant, soit rejette E15a (figure 3a) soit accepte E15b (figure 3b) l'appel entrant A. Ainsi, le terminal de communication 10 soit rejette E15a (figure 3a) soit accepte E15b (figure 3b) l'appel entrant A, en fonction du résultat de la qualification E30 de l'appel entrant A.

Ainsi, grâce au procédé de gestion conforme à l'invention, l'appel entrant A est rejeté lorsqu'aucun canal de communication ne peut être établi entre le terminal de communication 10 recevant un appel entrant A (figure 3a) et le terminal de communication 100 émettant l'appel entrant A. Au contraire, l'appel entrant A est accepté lorsqu'un canal de communication peut être établi entre le terminal de communication 10 recevant un appel entrant A et le terminal de communication 100 émettant l'appel entrant A.

On notera que dans ce mode de réalisation, le terminal de communication 10 prend la décision de maintenir ou de rejeter l'appel entrant en fonction du résultat de la qualification.

Dans un mode de réalisation non représenté, la décision de rejeter ou d'accepter l'appel entrant en fonction de la qualification E30 de l'identifiant d'appel est prise par le dispositif de gestion 20 lui-même. Selon certains modes de réalisation, le dispositif de gestion peut envoyer une requête au terminal de communication lui demandant de maintenir ou de rejeter l'appel entrant. Selon d'autres modes de réalisation, le dispositif de gestion peut lui-même maintenir ou rejeter l'appel entrant au terminal de communication.

Dans certains modes de réalisation, le résultat de la qualification de l'appel entrant est enregistré dans l'historique d'appels entrants et sortants du terminal de communication. Ainsi, l'utilisateur peut consulter dans son historique les identifiants d'appels associés à des appels entrants ayant été qualifiés comme étant malveillants ou *spam.*

Dans des modes de réalisations tels que ceux représentés sur les figures 3a et 3b, lorsque l'appel entrant A est reçu par le terminal de communication 10, il est mis en attente E0 tant que la vérification du routage E20 et la qualification E30 sont mises en œuvre.

Selon des modes de réalisation, l'appel entrant A est mise en attente E0 avant la signalisation ou présentation de l'appel entrant A dans le terminal de communication 10. Autrement dit, la signalisation de l'appel entrant A est retardée ou temporisé jusqu'à ce que l'appel entrant A soit qualifié E30.

Dans ce mode de réalisation, l'utilisateur du terminal de communication 10 n'est pas averti de l'appel entrant A tant que la vérification E20 et la qualification E30 de l'appel entrant A n'est mis en œuvre, c'est-à-dire tant que le dispositif de gestion 20 ne sache si l'appel est malveillant ou pas.

Dans ce mode de réalisation, la vérification de l'appel entrant A est mise en œuvre de manière transparente pour l'utilisateur du terminal de communication 10, l'utilisateur n'étant même pas averti de la réception d'un appel malveillant.

On notera que lorsque l'appel entrant A est qualifié d'appel entrant malveillant (figure 3a), il est rejeté sans être présenté à l'utilisateur, par exemple via l'interface de l'application destinée à la gestion des appels.

Dans d'autres modes de réalisation non représentés, l'appel entrant, au lieu d'être mis en attente, il est signalé à l'utilisateur du terminal de communication pendant que la vérification et la qualification sont mises en œuvre. Dans ces modes de réalisation, le procédé de gestion peut comporter en outre la génération d'un message indicatif de la mise en œuvre d'une vérification de l'appel entrant.

Ainsi, dans ce mode de réalisation l'utilisateur est mis au courant de la réception d'un appel entrant mais il est prévenu de la vérification de l'appel entrant. L'utilisateur peut ainsi attendre que l'appel entrant soit rejeté ou maintenu avant d'éventuellement prendre l'appel entrant.

Indépendamment de la mise en attente E0 de l'appel entrant A, le procédé de gestion peut comporter en outre la génération d'un message indicatif de la mise en œuvre d'une vérification E20 de l'appel entrant A.

Ainsi, dans un mode de réalisation dans lequel le procédé comporte la mise en attente E0 de l'appel entrant A pendant que la vérification E20 et la qualification E30 sont mises en œuvre, le procédé de gestion peut comporter en outre la génération d'un message indicatif de la mise en œuvre d'une opération de vérification de l'appel entrant A.

Dans ce mode de réalisation, l'utilisateur est informé du fait que son terminal de communication 10 a reçu un appel entrant A et que la vérification de cet appel entrant A est mise en œuvre.

Si le procédé de gestion ne comporte pas la génération d'un message indicatif de la mise en œuvre d'une opération de vérification de l'appel entrant A, le rejet d'un appel entrant de type spam est mis en œuvre de manière complétement transparente pour l'utilisateur. L'appel entrant de type *spam* peut être rejeté par le dispositif de gestion ou par le terminal de communication, par exemple par l'application de gestion des appels entrant en sortants.

Dans certains modes de réalisation, lorsqu'un appel entrant A est rejeté, tel que représenté à la figure 3a, le procédé de gestion comprend en outre la génération d'un message indiquant qu'un appel entrant malveillant a été détecté, ce message étant destiné à l'utilisateur et s'affichant par exemple via l'interface de l'application destinée à la gestion des appels. Grâce à ce message, l'utilisateur est informé de la détection et du rejet d'un appel entrant malveillant. Ce message peut être généré par le dispositif de gestion 20 ou par le terminal de communication 10 lui-même.

Le procédé de gestion peut aussi comporter la génération d'un message indiquant que l'appel entrant n'est pas malveillant.

On notera que le message généré indique le résultat de la qualification de l'appel entrant.

Dans certains modes de réalisation, l'utilisateur peut rejeter lui-même un appel entrant au vu de la réception d'un message indiquant qu'un appel entrant malveillant a été détecté, ou maintenir l'appel entrant au vu de la réception d'un message indiquent que l'appel entrant n'est pas malveillant.

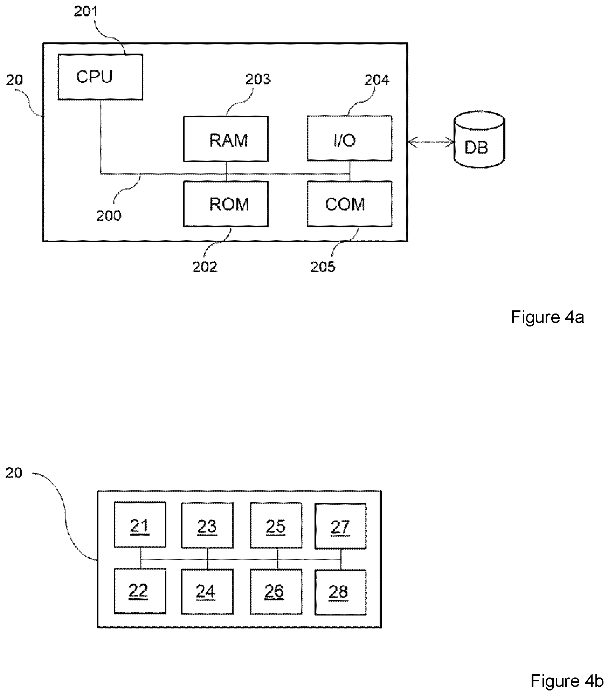

La **figure 4a** illustre schématiquement une architecture matérielle d'un dispositif de gestion 20 pouvant mettre en œuvre le procédé de gestion conforme à l'invention

Le dispositif de gestion 20 comprend un bus de communication 200 auquel sont reliées :
- une unité de traitement 201, nommée sur la figure CPU (pour « Central Processing Unit ») et pouvant comporter un ou plusieurs processeurs ;
- une mémoire non volatile 202, par exemple ROM (pour « Read Only Memory »), EEPROM (pour « Electrically Erasable Read Only Memory ») ou une mémoire Flash;
- une mémoire vive 203 ou RAM (pour « Random Access Memory ») ;
- une interface 204 d'entrée/sortie, nommée sur la figure I/O (pour « Input/Output »), par exemple des touches ou boutons, un écran, un clavier, une souris ou un autre dispositif de pointage tel qu'un écran tactile ou une télécommande permettant à un utilisateur d'interagir avec dispositif de gestion 20 via une interface graphique ou interface homme-machine ; et
- une interface de communication 205, nommée COM sur la figure, adaptée à échanger des données par exemple avec le terminal de communication 10 ou avec une base de données DB via un réseau de communication 40a, 40b.

La mémoire vive 203 comprend des registres adaptés à l'enregistrement des variables et paramètres créés et modifiés au cours de l'exécution d'un programme informatique comprenant des instructions pour la mise en œuvre du procédé de gestion selon l'invention. Les codes d'instructions du programme stocké en mémoire non-volatile 202 sont chargés en mémoire RAM 203 en vue d'être exécutés par l'unité de traitement CPU 201.

La mémoire non-volatile 202 est par exemple une mémoire réinscriptible de type EEPROM ou mémoire Flash pouvant constituer un support au sens de l'invention, c'est-à-dire pouvant comprendre un programme informatique comprenant des instructions pour la mise en œuvre du procédé de gestion selon l'invention. La mémoire réinscriptible peut comprendre par exemple une base de données répertoriant des identifiants d'appel malveillants. Cette base de données peut être mis à jour à fur et à mesure que des identifiants d'appels malveillants sont identifiés.

Ce programme définit, par le biais de ses instructions, des modules fonctionnels du dispositif de gestion 20 qui sont mise en œuvre et/ou commandent les éléments matériels décrits précédemment. La **figure 4b** est une représentation fonctionnelle d'un dispositif de gestion 20 d'un appel entrant A conforme à un mode de réalisation.

Ces modules comprennent notamment :
- un module de vérification du routage 21 configuré pour vérifier E20 le routage d'un appel sortant B vers l'identifiant d'appel associé à l'appel entrant A, et
- un module de qualification 22 configuré pour qualifier E30 l'appel entrant A en fonction du résultat de la vérification E20 mise en œuvre par le module de vérification 21, l'appel entrant A étant qualifié d'appel malveillant si selon la vérification E20, l'appel sortant B ne peut pas être acheminé ou routé.

Le dispositif de gestion 20 peut comprendre en outre, en fonction de modes de réalisation :
- un module de décision 23 configuré pour décider de rejeter ou de maintenir l'appel entrant A en fonction de la qualification E30 mise en œuvre par ledit module de qualification 22,
- un module d'émission 24 configuré pour émettre une requête de vérification de l'appel sortant pour vérifier si l'appel sortant B vers l'identifiant d'appel associé audit appel entrant A peut être acheminé,
- un module de réception 25 configuré pour recevoir un message représentatif de la possibilité ou de l'impossibilité de router (ou d'acheminer) ledit appel sortant B,
- un module de consultation 26 configuré pour consulter E100 préalablement à la vérification du routage E20, la présence de l'identifiant d'appel, dans une base de données DB répertoriant des identifiants d'appel malveillants,
- un module 27 configuré pour mettre en en attente ou temporiser E0 l'appel entrant A avant la signalisation de l'appel entrant A dans le terminal de communication 10 pendant que la vérification du routage E20 est mise en œuvre,
- un module de génération de messages 28 configuré pour générer un message E14 indicatif de la mise en œuvre de la vérification du routage 20 et/ou un message indiquant qu'un appel entrant malveillant a été détecté et/ou un message indiquant que l'appel entrant n'est pas malveillant.

Les modules et moyens précités sont pilotés par le processeur de l'unité de traitement 201. Ils peuvent prendre la forme d'un programme exécutable par un processeur, ou une forme matérielle (ou « hardware »), telle un circuit intégré spécialisé (connu en terminologie anglo-saxonne connu comme ASIC pour « Application-Specific Integrated Circuit »), un système sur puce (connu en terminologie anglo-saxonne comme SoC pour « System On Chip »), ou un composant électronique de type circuit logique programmable, tel qu'un composant de type FPGA (pour « Field-Programmable Gate Array »).

Le terminal de communication 10 comprend également un bus de communication auquel sont reliées une unité de traitement ou microprocesseur, une mémoire non volatile, une mémoire vive ou RAM, et une interface de communication adaptée notamment à échanger des données avec le dispositif de gestion 20. Le terminal de communication 10 peut par exemple informer au dispositif de gestion 20 qu'il a reçu un appel entrant A et lui envoyer un commande/requête de vérification de l'appel entrant A. En outre, le terminal de communication 10 peut recevoir des messages en provenance du dispositif de gestion 20 par exemple pour lui informer de la qualification de l'appel entrant A.

Dans un mode de réalisation le terminal de communication 10 comporte un module de décision (non visible sur les figures) configuré pour décider de rejeter ou de maintenir l'appel entrant en fonction de ladite qualification E30 mise en œuvre par ledit module de qualification 22 du dispositif de gestion 20.

Dans certains modes de réalisation, le dispositif de gestion 20 est intégré dans le terminal de communication 10.

## Revendications

1. Procédé de gestion d'un appel entrant (A) dans un terminal de communication (10), l'appel entrant (A) ayant un identifiant d'appel associé, ledit identifiant d'appel permettant d'identifier dans un réseau de communications un terminal de communication émettant l'appel entrant, ledit procédé de gestion étant mis en œuvre par un dispositif de gestion et étant **caractérisé en ce qu'**il comporte :
- la vérification du routage (E20) d'un appel sortant (B) vers l'identifiant d'appel associé à l'appel entrant (A), ladite vérification comprenant l'émission d'un appel sortant vers ledit identifiant d'appel, et
- la qualification (E30) de l'appel entrant (A) en fonction du résultat de la vérification du routage (E20), l'appel entrant (A) étant qualifié d'appel entrant malveillant s'il résulte de la vérification du routage (E20) que l'appel sortant (B) émis vers ledit identifiant d'appel ne peut pas être acheminé.

2. Procédé de gestion conforme à la revendication 1, comportant en outre soit le rejet de l'appel entrant soit le maintien de l'appel entrant (A), en fonction de la qualification (E30) dudit appel entrant (A), le rejet de l'appel entrant (A) étant mis en œuvre si l'appel entrant (A) est qualifié d'appel malveillant.

3. Procédé de gestion conforme à la revendication 1, dans lequel ladite vérification du routage (E20) comporte l'émission (E12(B)) d'une requête de vérification de l'appel sortant (B) pour déterminer si l'appel sortant (B) peut être acheminé.

4. Procédé de gestion conforme à la revendication 1, dans lequel ladite vérification du routage (E20) comporte la vérification d'informations relatives à l'identifiant d'appel associé à l'appel entrant (A), dans une base de données répertoriant la totalité d'identifiants d'appels autorisés à utiliser un réseau de communications (40).

5. Procédé de gestion conforme à la revendication 1, comportant préalablement à ladite vérification du routage (E20), la consultation de la présence dudit identifiant d'appel, dans une base de données (DB) répertoriant des identifiants d'appel malveillants, ladite vérification (E20) étant mise en œuvre si ledit identifiant d'appel n'est pas présent dans ladite base de données (DB).

6. Procédé de gestion conforme à la revendication 1, comportant la temporisation de la présentation dudit appel entrant (A) dans ledit terminal de communication (10), ladite temporisation étant mise en œuvre pendant que ladite vérification du routage (E20) et ladite qualification de l'appel entrant (E30) sont mises en œuvre.

7. Dispositif de gestion d'un appel entrant dans un terminal de communication, l'appel entrant ayant un identifiant d'appel associé, ledit identifiant d'appel permettant d'identifier dans un réseau de communications un terminal de communication émettant l'appel entrant, ledit dispositif de gestion (20) étant **caractérisé en ce qu'**il comporte :
- un module de vérification du routage (21) configuré pour vérifier le routage (E20) d'un appel sortant (B) vers l'identifiant d'appel associé à l'appel entrant (A) ladite vérification comprenant l'émission d'un appel sortant vers ledit identifiant d'appel, et
- un module de qualification (22) configuré pour qualifier (E30) l'appel entrant (A) en fonction du résultat de la vérification du routage (E20) mise en œuvre par le module de vérification (21), l'appel entrant (A) étant qualifié (E30) d'appel malveillant si selon la vérification du routage (E20), l'appel sortant (B) émis vers ledit identifiant d'appel ne peut pas être acheminé.

8. Terminal de communication **caractérisé en ce qu'**il comporte un dispositif de gestion (20) d'un appel entrant (A) conforme à la revendication 7.

9. Dispositif d'interface entre deux réseaux de communication (40a, 40b), **caractérisé en ce qu'**il comporte un dispositif de gestion (20) d'un appel entrant (A) conforme à la revendication 7.

10. Programme d'ordinateur comprenant une séquence d'instructions pour la mise en œuvre du procédé de gestion d'un appel entrant conforme à l'une des revendications 1 à 6, lorsqu'il est chargé et exécuté par un processeur du dispositif de gestion d'un appel entrant.

11. Support d'informations lisible par un ordinateur, sur lequel est enregistré un programme d'ordinateur comprenant une séquence d'instructions pour la mise en œuvre du procédé de gestion d'un appel entrant conforme à l'une des revendications 1 à 6, lorsqu'il est chargé dans et exécuté par un processeur du dispositif de gestion d'un appel entrant.

## Patentansprüche

1. Verfahren zur Verwaltung eines eingehenden Anrufs (A) in einem Kommunikationsendgerät (10), wobei der eingehende Anruf (A) eine zugeordnete Anrufkennung hat, wobei die Anrufkennung es ermöglicht, in einem Kommunikationsnetz ein Kommunikationsendgerät zu identifizieren, das den eingehenden Anruf aussendet, wobei das Verfahren zur Verwaltung von einer Vorrichtung zur Verwaltung ausgeführt wird und **dadurch gekennzeichnet ist, dass** es umfasst:
- die Überprüfung des Routings (E20) eines abgehenden Anrufs (B) zu der dem eingehenden Anruf (A) zugeordneten Anrufkennung, wobei die Überprüfung das Aussenden eines abgehenden Anrufs zu der Anrufkennung umfasst, und
- die Einstufung (E30) des eingehenden Anrufs (A) in Abhängigkeit von dem Ergebnis der Überprüfung des Routings (E20), wobei der eingehende Anruf (A) als böswilliger eingehender Anruf eingestuft wird, wenn die Überprüfung des Routings (E20) ergibt, dass der zu der Anrufkennung ausgesendete abgehende Anruf (B) nicht geroutet werden kann.

2. Verfahren zur Verwaltung nach Anspruch 1, umfassend ferner entweder das Abweisen des eingehenden Anrufs oder das Halten des eingehenden Anrufs (A), in Abhängigkeit von der Einstufung (E30) des eingehenden Anrufs (A), wobei das Abweisen des eingehenden Anrufs (A) ausgeführt wird, wenn der eingehende Anruf (A) als böswilliger Anruf eingestuft wird.

3. Verfahren zur Verwaltung nach Anspruch 1, wobei die Überprüfung des Routings (E20) das Aussenden (E12(B)) einer Anforderung zur Überprüfung des abgehenden Anrufs (B) umfasst, um zu bestimmen, ob der abgehende Anruf (B) geroutet werden kann.

4. Verfahren zur Verwaltung nach Anspruch 1, wobei die Überprüfung des Routings (E20) die Überprüfung von Informationen bezüglich der dem eingehenden Anruf (A) zugeordneten Anrufkennung in einer Datenbank umfasst, die sämtliche Anrufkennungen enthält, die zur Nutzung eines Kommunikationsnetzes (40) berechtigt sind.

5. Verfahren zur Verwaltung nach Anspruch 1, umfassend vor der Überprüfung des Routings (E20) das Abfragen des Vorhandenseins der Anrufkennung in einer Datenbank (DB), die böswillige Anrufkennungen enthält, wobei die Überprüfung (E20) ausgeführt wird, wenn die Anrufkennung nicht in der Datenbank (DB) vorhanden ist.

6. Verfahren zur Verwaltung nach Anspruch 1, umfassend die Verzögerung des Anzeigens des eingehenden Anrufs (A) in dem Kommunikationsendgerät (10), wobei die Verzögerung ausgeführt wird, während die Überprüfung des Routings (E20) und die Einstufung des eingehenden Anrufs (E30) ausgeführt werden.

7. Vorrichtung zur Verwaltung eines eingehenden Anrufs in einem Kommunikationsendgerät, wobei der eingehende Anruf eine zugeordnete Anrufkennung hat, wobei die Anrufkennung es ermöglicht, in einem Kommunikationsnetz ein Kommunikationsendgerät zu identifizieren, das den eingehenden Anruf aussendet, wobei die Vorrichtung (20) zur Verwaltung **dadurch gekennzeichnet ist, dass** sie umfasst:
- ein Modul zur Überprüfung des Routings (21), das dazu ausgestaltet ist, das Routing (E20) eines abgehenden Anrufs (B) zu der dem eingehenden Anruf (A) zugeordneten Anrufkennung zu überprüfen, wobei die Überprüfung das Aussenden eines abgehenden Anrufs zu der Anrufkennung umfasst, und
- ein Modul zur Einstufung (22), das dazu ausgestaltet ist, den eingehenden Anruf (A) in Abhängigkeit von dem Ergebnis der Überprüfung des Routings (E20), die von dem Modul zur Überprüfung (21) ausgeführt wird, einzustufen (E30), wobei der eingehende Anruf (A) als böswilliger Anruf eingestuft wird (E30), wenn gemäß der Überprüfung des Routings (E20) der zu der Anrufkennung ausgesendete abgehende Anruf (B) nicht geroutet werden kann.

8. Kommunikationsendgerät, **dadurch gekennzeichnet, dass** es eine Vorrichtung (20) zur Verwaltung eines eingehenden Anrufs (A) nach Anspruch 7 umfasst.

9. Schnittstellenvorrichtung zwischen zwei Kommunikationsnetzen (40a, 40b), **dadurch gekennzeichnet, dass** sie eine Vorrichtung (20) zur Verwaltung eines eingehenden Anrufs (A) nach Anspruch 7 umfasst.

10. Computerprogramm, das eine Sequenz aus Anweisungen umfasst, die bei seinem Laden und Ausführen durch einen Prozessor der Vorrichtung zur Verwaltung eines eingehenden Anrufs das Verfahren zur Verwaltung eines eingehenden Anrufs nach einem der Ansprüche 1 bis 6 ausführen.

11. Datenträger, der von einem Computer gelesen werden kann und auf dem ein Computerprogramm gespeichert ist, das eine Sequenz aus Anweisungen umfasst, die bei seinem Laden in und Ausführen durch einen Prozessor der Vorrichtung zur Verwaltung eines eingehenden Anrufs das Verfahren zur Verwaltung eines eingehenden Anrufs nach einem der Ansprüche 1 bis 6 ausführen.

## Claims

1. Method for managing an incoming call (A) in a communication terminal (10), the incoming call (A) having an associated call identifier, said call identifier making it possible to identify a communication terminal making the incoming call in a communications network, said management method being implemented by a management device and being **characterized in that** it comprises:
- checking the routing (E20) of an outgoing call (B) to the call identifier associated with the incoming call (A), said checking comprising making an outgoing call to said call identifier, and
- classifying (E30) the incoming call (A) on the basis of the result of the checking of the routing (E20), the incoming call (A) being classified as a malicious incoming call if the checking of the routing (E20) reveals that the outgoing call (B) made to said call identifier is not able to be routed.

2. Management method according to Claim 1, furthermore comprising either rejecting the incoming call or maintaining the incoming call (A) on the basis of the classification (E30) of said incoming call (A), the incoming call (A) being rejected if the incoming call (A) is classified as a malicious call.

3. Management method according to Claim 1, wherein said checking of the routing (E20) comprises transmitting (E12(B)) a request to check the outgoing call (B) in order to determine whether the outgoing call (B) is able to be routed.

4. Management method according to Claim 1, wherein said checking of the routing (E20) comprises checking information relating to the call identifier associated with the incoming call (A) in a database listing all of the call identifiers authorized to use a communications network (40).

5. Management method according to Claim 1, comprising, prior to said checking of the routing (E20), consulting the presence of said call identifier in a database (DB) listing malicious call identifiers, said check (E20) being performed if said call identifier is not present in said database (DB).

6. Management method according to Claim 1, comprising delaying the presentation of said incoming call (A) on said communication terminal (10), said delaying being implemented while said checking of the routing (E20) and said classification of the incoming call (E30) are being performed.

7. Device for managing an incoming call in a communication terminal, the incoming call having an associated call identifier, said call identifier making it possible to identify a communication terminal making the incoming call in a communications network, said management device (20) being **characterized in that** it comprises:
- a routing checking module (21) configured so as to check the routing (E20) of an outgoing call (B) to the call identifier associated with the incoming call (A), said checking comprising making an outgoing call to said call identifier, and
- a classification module (22) configured so as to classify (E30) the incoming call (A) on the basis of the result of the checking of the routing (E20) performed by the checking module (21), the incoming call (A) being classified (E30) as a malicious call if, according to the checking of the routing (E20), the outgoing call (B) made to said call identifier is not able to be routed.

8. Communication terminal, **characterized in that** it comprises a device (20) for managing an incoming call (A) according to Claim 7.

9. Interface device between two communication networks (40a, 40b), **characterized in that** it comprises a device (20) for managing an incoming call (A) according to Claim 7.

10. Computer program comprising a sequence of instructions for implementing the method for managing an incoming call according to one of Claims 1 to 6 when it is loaded and executed by a processor of the device for managing an incoming call.

11. Computer-readable information medium on which there is recorded a computer program comprising a sequence of instructions for implementing the method for managing an incoming call according to one of Claims 1 to 6 when it is loaded into and executed by a processor of the device for managing an incoming call.
